# EUROPEAN PATENT APPLICATION

(11) **EP 1 292 040 A2**
(43) Date of publication of application: **12.03.2003**
(21) Application number: 02018110.3
(22) Date of filing: 13.08.2002
(51) Int. Cl.: H04B 1/38

(54) **Information communication apparatus and wireless communication terminal**

(30) Priority: 07.09.2001 JP 2001271893
(71) Applicant: Kabushiki Kaisha Toshiba, Tokyo 105-8001 (JP)
(72) Inventor: Matsumura, Masafumi, Minato-ku, Tokyo 105-8001 (JP); Ushimaru, Chikara, Minato-ku, Tokyo 105-8001 (JP)
(74) Representative: Henkel, Feiler, Hänzel

(57) **Abstract**

A communication control unit (11) determines a wireless communication stop period upon executing intermittent wireless communication, on the basis of the remaining amount detected by a battery remaining amount detection unit (7), and executes intermittent wireless communication with another apparatus in accordance with the determined wireless communication stop period.

## Description

The present invention relates to an information communication apparatus and wireless communication terminal for making wireless communication.

In general, it is required for an information terminal that makes wireless communication and, especially, an information terminal that operates using a built-in battery as a power supply, to achieve power saving to prolong operative time.

A power control technique that reduces consumed power is disclosed in, e.g., Jpn. Pat. Appln. KOKAI Publication No. 10-271062. The technique disclosed in Jpn. Pat. Appln. KOKAI Publication No. 10-271062 achieves power saving by reducing the consumed power of an information processor during transmission by a wireless communication unit. For this purpose, the wireless communication unit comprises an information processor for executing information processing of data which is to be exchanged using radio, and a consumed current limiting means for limiting the operation of the information processor to fall within a predetermined consumed current range during transmission of data that has undergone information processing by the information processor from the wireless communication unit using radio. This consumed current limiting means controls the information processor on the basis of the battery remaining amount of a power supply unit and the presence/absence of power supply from an external power supply.

Recently, a card type wireless communication device is being used. Such a wireless communication device can make an information terminal operate as an information communication apparatus when it is inserted into the information terminal. The card type wireless communication device is a card which can be inserted into a slot provided in the information terminal, and has a wireless communication function. When the card type wireless communication device is inserted into the slot of the information terminal, wireless communication is controlled by the information terminal.

When the information terminal makes wireless communication using the card type wireless communication device, it must control wireless communication in the card type wireless communication device to reduce electric power consumed by wireless communication. The card type wireless communication device is designed to be used in various types of information terminal. Hence, the information terminal must provide a function of controlling wireless communication in correspondence with respective card type wireless communication devices when a plurality of types of card type wireless communication devices are used.

The following method of controlling the data size to be transmitted upon transmitting data via a communication path is known.

For example, Jpn. Pat. Appln. KOKAI Publication No. 2000-332829 discloses a reception data size control method that allows reception data size control from a transmitting terminal and efficient real-time data communication from the transmitting terminal without any disturbance of audio or image data in a receiving terminal such as an Internet videophone. In this method, when the receiving terminal recognizes that packet loss or packet fluctuation has exceeded a predetermined value in real-time data communication, it transmits a data size change request packet to the transmitting terminal. Upon receiving this packet, the transmitting terminal changes the data encoding method to change the data size to be transmitted, and transmits data.

This method aims at reducing disturbance of audio or image data even when the traffic on a communication path is heavy, and changes the data size to be transmitted in correspondence with the packet loss or packet fluctuation. Therefore, this method transmits data with an excessively large data size even when high-quality audio or image data need not be transmitted, thus often inefficiently consuming electric power.

As described above, in a conventional information communication apparatus, when wireless communication is made using a card type wireless communication device, communication control corresponding to the card type wireless communication device used in the information terminal must be made so as to reduce electric power consumed by wireless communication.

Upon transmitting data via a communication path, the technique for changing the data size to be transmitted to reduce disturbance of audio or image data even when the traffic on the communication path is heavy is available. However, this control method often inefficiently consumes electric power.

It is, therefore, an object of the present invention to provide an information communication apparatus and wireless communication terminal which can reduce electric power consumed by wireless communication.

According to one aspect of the present invention, there is provided an information communication apparatus for making wireless communication with another apparatus, comprising: a battery; a battery remaining amount detection unit for detecting a remaining amount of the battery; a stop period determination unit for determining a wireless communication stop period upon executing intermittent wireless communication on the basis of the remaining amount detected by the battery remaining amount detection unit; a wireless communication unit for executing intermittent wireless communication with the other apparatus in accordance with the wireless communication stop period determined by the stop period determination unit; and a control unit for stopping operation of the intermittent wireless communication executed by the wireless communication unit during the wireless communication stop period.

According to another aspect of the present invention, there is provided an information communication apparatus for making wireless communication with another apparatus, comprising: a stop period determination unit for determining a wireless communication stop period upon executing intermittent wireless communication on the basis of a size of data to be transmitted/received by the wireless communication; a wireless communication unit for executing intermittent wireless communication with the other apparatus in accordance with the wireless communication stop period determined by the stop period determination unit; and a control unit for stopping operation of the intermittent wireless communication executed by the wireless communication unit during the wireless communication stop period.

According to still another aspect of the present invention, there is provided a wireless communication terminal which is mounted on an information terminal, and makes wireless communication with another apparatus, comprising: a stop period determination unit for determining a wireless communication stop period upon executing intermittent wireless communication on the basis of a size of information associated with electric power, which is acquired from the information terminal; a wireless communication unit for executing intermittent wireless communication with the other apparatus in accordance with the wireless communication stop period determined by the stop period determination unit; and a control unit for stopping operation of the intermittent wireless communication executed by the wireless communication unit during the wireless communication stop period.

According to still another aspect of the present invention, there is provided a wireless communication terminal which is mounted on an information terminal, and makes wireless communication with another apparatus, comprising: a stop period determination unit for determining a wireless communication stop period upon executing intermittent wireless communication on the basis of a size of data to be transmitted/received by the wireless communication; a wireless communication unit for executing intermittent wireless communication with the other apparatus in accordance with the wireless communication stop period determined by the stop period determination unit; and a control unit for stopping operation of the intermittent wireless communication executed by the wireless communication unit during the wireless communication stop period.

According to still another aspect of the present invention, there is provided an information communication apparatus for transmitting data to another apparatus via wireless communication, comprising: a transmission data size setting unit for setting a transmission data size on the basis of environmental information; and an encoding unit for adjusting the transmission data size by encoding data to be transmitted to the other apparatus so as to meet the transmission data size set by the transmission data size setting unit.

According to still another aspect of the present invention, there is provided an information communication apparatus for transmitting data to another apparatus via wireless communication, comprising:
a battery; a battery remaining amount detection unit for detecting a remaining amount of the battery;
a transmission data size setting unit for setting
a transmission data size on the basis of the battery remaining amount detected by the battery remaining amount detection unit; and an encoding unit for adjusting the transmission data size by encoding data to be transmitted to the other apparatus so as to meet the transmission data size set by the transmission data size setting unit.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a schematic view showing the arrangement of an information communication apparatus according to the first embodiment;
FIG. 2 is a block diagram showing the system arrangement of the information communication apparatus shown in FIG. 1;
FIGS. 3A to 3C are views for explaining data transfer in Bluetooth;
FIG. 4 is a chart showing the flow of control for changing a communication method upon exchanging various kinds of information between an information terminal 1 and card type wireless communication terminal 2;
FIG. 5 is a flowchart showing the flow of control in the information terminal 1;
FIG. 6 is a flowchart showing the flow of control in the card type wireless communication terminal 2;
FIG. 7 is a flowchart showing the flow of control based on required consumed power information in the card type wireless communication terminal 2;
FIGS. 8A and 8B show an example of table data pre-stored in a ROM 16 of the card type wireless communication terminal 2;
FIG. 9 is a flowchart showing the flow of control when there is no data to be exchanged in the card type wireless communication terminal 2;
FIGS. 10A and 10B show an example of table data pre-stored in the ROM 16 of the card type wireless communication terminal 2;
FIG. 11 is a flowchart showing the flow of control when the size of data to be exchanged becomes equal to or smaller than a predetermined size in the card type wireless communication terminal 2;
FIG. 12 is a schematic diagram showing the arrangement of an information transmission system using information communication apparatuses (information transmission apparatuses 20 and 22) according to the second embodiment;
FIG. 13 is a block diagram showing the system arrangement of the information transmission apparatuses 20 and 22;
FIG. 14 is a flowchart showing the flow of control in the information transmission apparatus 22 on the data receiving side;
FIGS. 15A to 15D show an example of rule data used in the second embodiment;
FIG. 16 is a flowchart showing the flow of control in the information transmission apparatus 20 on the data transmitting side;
FIG. 17 is a flowchart showing the flow of control in accordance with a change in ambient temperature in the information transmission apparatus 20;
FIG. 18 is a flowchart showing the flow of control in accordance with the battery remaining amount of a battery 33 in the information transmission apparatus 20; and
FIG. 19 is a flowchart showing the flow of control for changing the data size to be transmitted per unit time in accordance with a change in ambient temperature in the information transmission apparatus 20.

Preferred embodiments of the present invention will be described hereinafter with reference to the accompanying drawings.

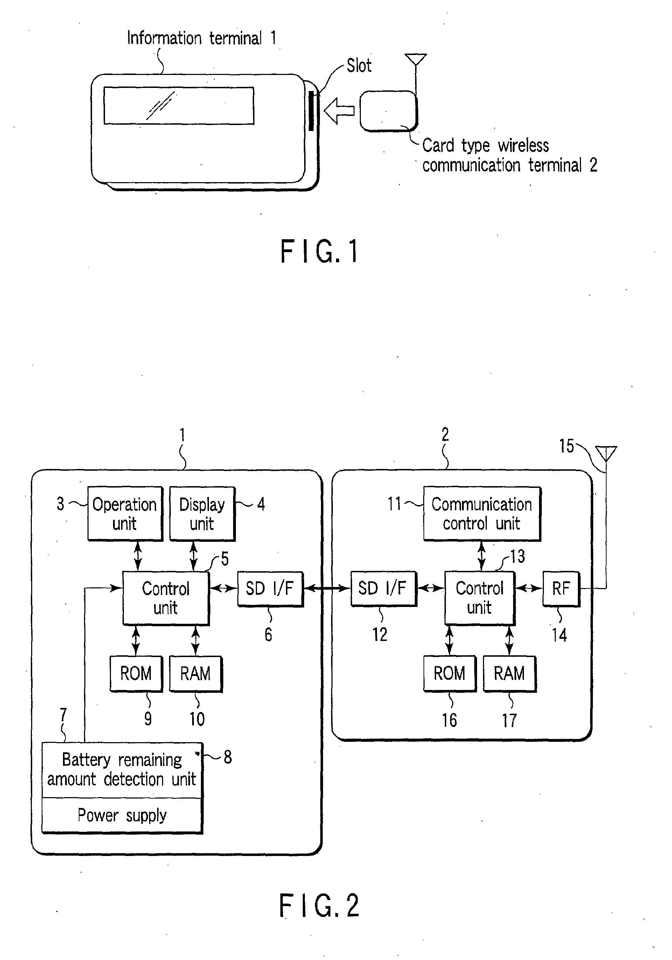

FIG. 1 is a schematic view showing the arrangement of an information communication apparatus according to the first embodiment. The information communication apparatus of the first embodiment is constituted by inserting a card type wireless communication terminal 2 (wireless communication terminal) into an information terminal 1. The information terminal 1 is implemented by a computer which loads a program recorded on a recording medium, and the operation of which is controlled by the program. The card type wireless communication terminal 2 is implemented by mounting a wireless communication function on, e.g., an SD (Secure Digital) memory card. The SD memory card complies with compact memory card standards for memory cards with a copyright protection function, recommended by the SD Association. As a wireless communication technique mounted on the card type wireless communication terminal 2, Bluetooth is used. Therefore, the card type wireless communication terminal 2 can use any information terminal 1 as long as it has an SD card slot, and can make wireless communication with another apparatus which has a wireless communication function based on Bluetooth.

FIG. 2 is a block diagram showing the system arrangement of the information communication apparatus shown in FIG. 1.

As shown in FIG. 2, the information terminal 1 comprises an operation unit 3, display unit 4, control unit 5, SD interface 6, battery remaining amount detection unit 7, power supply 8, ROM 9, and RAM 10. The operation unit 3 inputs instructions to the information terminal 1 by means of user operations via various input devices.

The display unit 4 displays various kinds of information to be presented to the user on a display under the control of the control unit 5.

The control unit 5 controls respective units in accordance with a program stored in the ROM 9 or RAM 10. The control unit 5 sends control information, which includes battery remaining amount information of the power supply 8, which is transmitted from the battery remaining amount detection unit 7, or required consumed power remaining amount information, to the card type wireless communication terminal 2, so as to reduce electric power consumed by wireless communication of the card type wireless communication terminal 2.

The SD interface 6 is an interface with the card type wireless communication terminal 2, which complies with SD memory card standards, and makes data communication, control information communication, power supply, and the like.

The battery remaining amount detection unit 7 detects the battery remaining amount of the power supply 8, and transmits it to the control unit 5.

The power supply 8 is a built-in battery, which supplies electric power to the information terminal 1 and card type wireless communication terminal 2.

The ROM 9 stores a program and the like used to control the information terminal 1.

The RAM 10 stores a program, data, and the like used to control the information terminal 1.

The card type wireless communication terminal 2 comprises a communication control unit 11, SD interface 12, control unit 13, RF unit 14, antenna 15, ROM 16, and RAM 17.

The communication control unit 11 makes communication control to attain power control. In the first embodiment, since Bluetooth is used as a wireless communication technique, communication in a power saving mode according to Bluetooth standards is executed to reduce electric power consumed by wireless communication.

The SD interface 12 is an interface with the information terminal 1, which complies with the SD memory card standards, and makes data communication, control information communication, power supply, and the like.

The control unit 13 controls wireless communication according to Bluetooth standards (e.g., baseband control, a link controller, and the like) in accordance with a program (information communication program) stored in the ROM 16 or RAM 17.

The RF unit 14 is a wireless communication interface (I/F), which demodulates a signal received via the antenna 15 and outputs the demodulated signal to the control unit 13, and modulates a signal from the control unit 13 and transmits the modulated signal via the antenna 15.

The ROM 16 pre-stores an information communication program, data, and the like used to make wireless communication and data transfer. The data pre-stored in the ROM 16 include table data used to control the operation state so as to reduce electric power consumed by wireless communication.

The RAM 17 stores an information communication program, data, and the like used to make wireless communication and data transfer.

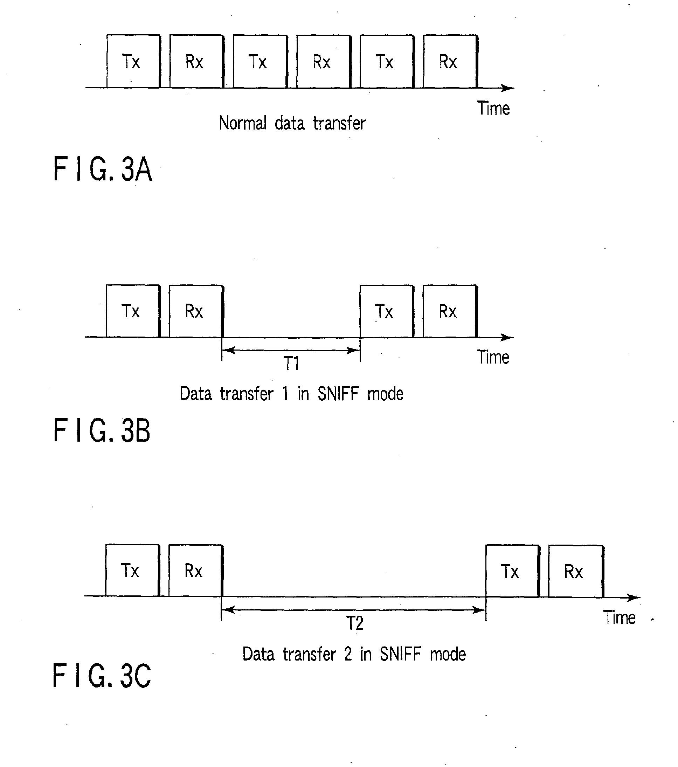

In the information communication apparatus of the first embodiment, the card type wireless communication terminal 2 changes a communication mode on the basis of electric power remaining amount information received from the information terminal 1, and attains power saving by intermittently making data communication. This corresponds to data transfer in SNIFF mode in Bluetooth. In a normal data transfer processing state based on Bluetooth, packets are alternately transmitted and received, as shown in FIG. 3A. However, in SNIFF mode, packets are transmitted/received intermittently, as shown in FIG. 3B. For this reason, the operation of the card type wireless communication terminal 2 can be stopped, i.e., clocks can be stopped during a period in which no packet transmission/reception is made (time period T1). Therefore, consumed power can be suppressed in correspondence with the operation stop period. Also, in SNIFF mode, when the time period in which no transmission/reception is made is set to be a time period T2 longer than the time period T1, as shown in FIG. 3C, consumed power can be further suppressed.

The operation in the first embodiment will be described below.

In the first embodiment, assume that the card type wireless communication terminal 2 shifts to SNIFF mode (1) when electric power remaining amount information is received from the information terminal 1, (2) when required consumed power information is received from the information terminal 1, and (3) when the size of data to be transmitted/received with an apparatus as a wireless communication partner is equal to or smaller than a predetermined size, or there is no data to be transmitted/received. Situations (1) to (3) will be explained below.

(1) A case will be explained below wherein the card type wireless communication terminal 2 shifts to SNIFF mode upon receiving electric power remaining amount information from the information terminal 1.

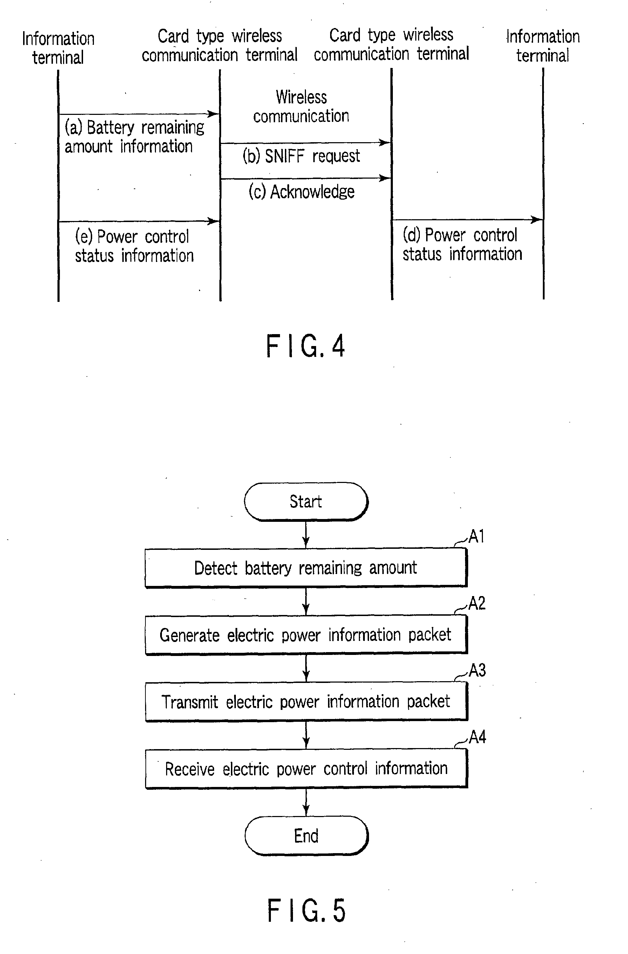

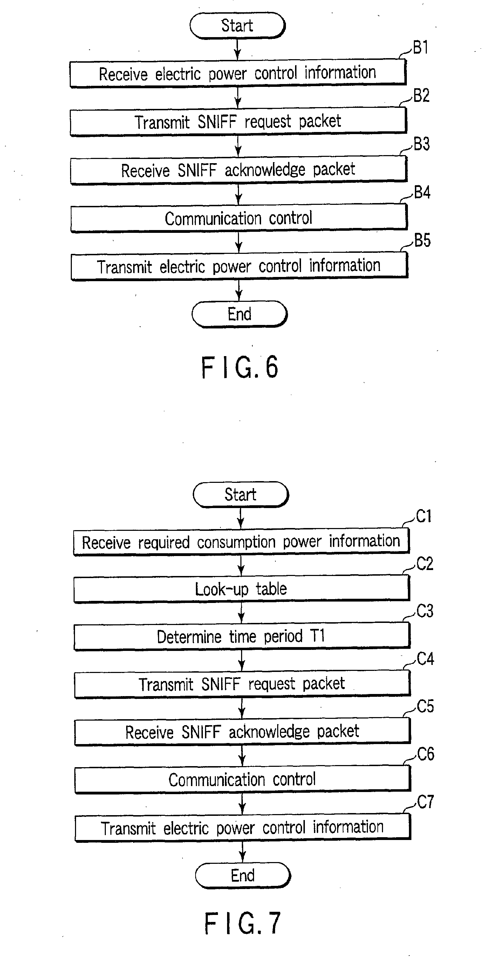

FIG. 4 shows the flow of control for changing a communication method upon exchanging various kinds of information between the information terminal 1 and card type wireless communication terminal 2, FIG. 5 is a flowchart showing the flow of control in the information terminal 1, and FIG. 6 is a flowchart showing the flow of control in the card type wireless communication terminal 2. Note that FIG. 4 assumes as a wireless communication partner an information communication apparatus which is constituted by inserting a card type wireless communication terminal 2 into an information terminal 1, as in FIGS. 1 and 2.

If the control unit 5 of the information terminal 1 detects using the electric power (battery) remaining amount detection unit 7 that the battery remaining amount of the power supply 8 becomes equal to or smaller than a predetermined value (step A1), it generates an electric power information packet to transmit that information to the card type wireless communication terminal 2 as electric power remaining amount information (step A2). The control unit 5 outputs the electric power information packet to the card type wireless communication terminal 2 via the SD interface 6 (step A3, (a) of FIG. 4).

On the other hand, the card type wireless communication terminal 2 receives the packet from the information terminal 1 via the SD interface 12, and interprets it using the communication control unit 11. As a result, if the received packet is the electric power information packet (step B1), the communication control unit 11 calculates a stop time period upon making intermittent communication in SNIFF mode on the basis of a clock stoppable time period and the communication frequency band to be assured, so as to suppress consumed power to a required value.

The control unit 13 outputs a SNIFF request packet that requests communication in SNIFF mode for the calculated stop time period to the wireless communication partner via the RF unit 14 and antenna 15 (step B2, (b) of FIG. 4).

On the other hand, upon receiving the SNIFF request packet by the card type wireless communication terminal, the information communication apparatus as the wireless communication partner sends back a SNIFF acknowledge packet if it can make wireless communication in SNIFF mode according to this SNIFF request ((c) of FIG. 4), and sends electric power control information to inform the information terminal that wireless communication are to be made in SNIFF mode ((d) of FIG. 4).

Upon receiving the SNIFF acknowledge packet from the wireless communication partner in response to the SNIFF request packet sent to that wireless communication partner (step B3, (c) of FIG. 4), the control unit 13 of the card type wireless communication terminal 2 instructs execution of communication control according to the stop time period used upon making intermittent communication in SNIFF mode, which is previously calculated by the communication control unit 11 (step B4), and sends electric power control information to inform the information terminal 1 that the wireless communication partner has accepted the SNIFF request and wireless communication are to be made in SNIFF mode (step B5, (e) of FIG. 4).

In this manner, the information terminal 1 receives electric power control information from the card type wireless communication terminal 2 when electric power consumed by wireless communication of the card type wireless communication terminal 2 can be suppressed by detecting a small remaining amount of the battery 8 and transmitting electric power remaining amount information to the card type wireless communication terminal 2 (step A4).

Since the card type wireless communication terminal 2 shifts to SNIFF mode under the control of the communication control unit 11, and intermittently executes data transmission/reception, clocks can be stopped during a period in which no data transfer is executed, thus suppressing consumed power.

When the wireless communication partner does not accept the SNIFF request, the card type wireless communication terminal 2 does not make communication in SNIFF mode for suppressing consumed power.

In this way, when the battery remaining amount of the power supply 8 of the information terminal 1 becomes equal to or smaller than a predetermined value, battery remaining amount information is transmitted to the card type wireless communication terminal 2, which shifts to a mode for executing intermittent wireless communication in response to the battery remaining amount information, thus reducing consumed power. Since electric power consumed by wireless communication of the card type wireless communication terminal 2 can be suppressed, electric power consumed by the overall information communication apparatus can be reduced.

Note that the information terminal 1 may continuously transmit the battery remaining amount information to the card type wireless communication terminal 2, which may calculate a clock stop time period in accordance with the current battery remaining amount, thus dynamically changing the clock stop time period (a communication stop time period upon intermittently making wireless communication) in correspondence with the change in battery remaining amount. Also, when the information terminal 1 detects that the battery remaining amount has reached a predetermined value, it may transmit the battery remaining amount information to the card type wireless communication terminal 2, and may continue wireless communication in accordance with a clock stop time period calculated based on this battery remaining amount information.

(2) A case will be explained below wherein the card type wireless communication terminal 2 shifts to SNIFF mode upon receiving required consumed power information from the information terminal 1.

FIG. 7 is a flowchart showing the flow of control based on required consumed power information in the card type wireless communication terminal 2.

When the electric power remaining amount detection unit 7 detects that the battery remaining amount of the power supply 8 becomes equal to or smaller than a predetermined value, the control unit 5 of the information terminal 1 generates an electric power information packet by appending information associated with required consumed power (required consumed power information) upon transmitting the detected information to the card type wireless communication terminal 2 as electric power remaining amount information, in the same manner as in case (1) above. The required consumed power information is information output when the information terminal 1 informs the card type wireless communication terminal 2 about an electric power amount to be consumed by wireless communication of the card type wireless communication terminal 2.

Upon receiving the electric power information packet that contains required consumed power information from the information terminal 1 (step C1), the card type wireless communication terminal 2 determines a time period T1 in which no packet transmission/reception is made upon making intermittent wireless communication in SNIFF mode in accordance with the required consumed power information by looking up table data stored in the ROM 16 (step C2, C3).

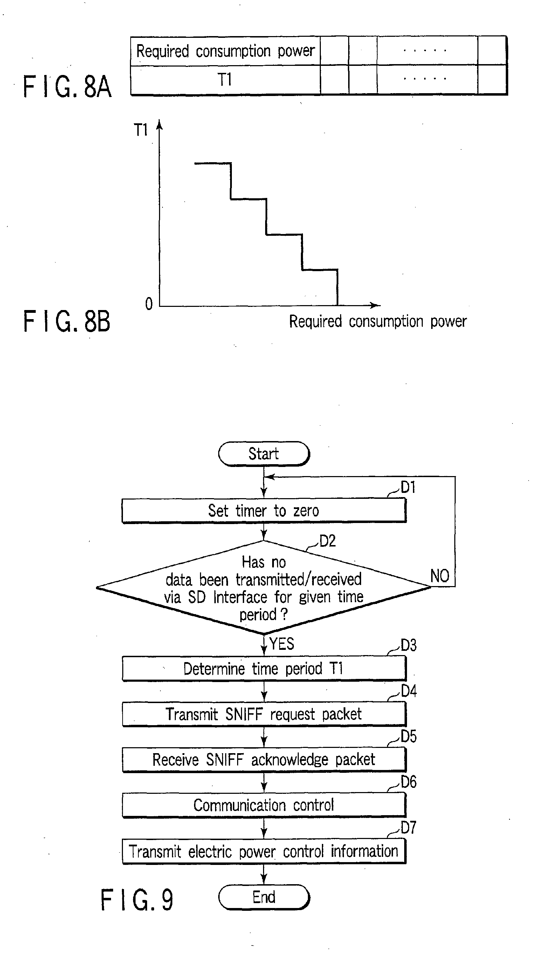

FIGS. 8A and 8B show an example of table data pre-stored in the ROM 16 of the card type wireless communication terminal 2. As shown in FIG. 8A, the ROM 16 stores a table set with data that indicates the time period T1 corresponding to each required consumed power value sent from the information terminal 1. The data indicating the time period T1 in the table is. set on the basis of the relationship between the required consumed power and time period T1, as shown in FIG. 8B. That is, the longer time period T1 is set with decreasing required consumed power.

Therefore, the card type wireless communication terminal 2 determines the time period T1 by looking up the table data stored in the ROM 16. That is, when the required consumed power is small, a long time period T1 is set to intermittently make wireless communication so as to prolong the clock stoppable time period, thereby reducing consumed power; when the required consumed power is large, a short time period T1 is set to intermittently make wireless communication so as to shorten the clock stoppable time period. In this manner, the card type wireless communication terminal 2 can appropriately determine the time period T1 in correspondence with the consumed power required from the information terminal 1.

On the other hand, the information terminal 1 can calculate electric power to be consumed by wireless communication of the card type wireless communication terminal 2 by sending required consumed power information to the card type wireless communication terminal 2. Therefore, the information terminal 1 can recognize the consumption time of the power supply 8 more accurately.

Note that the processes in steps C4 to C7 in the flowchart shown in FIG. 7 are the same as those in steps B2 to B5 in the flowchart shown in FIG. 6, and a detailed description thereof will be omitted.
Also, since the information terminal 1 executes the same process as in the flowchart shown in FIG. 5, a detailed description thereof will be omitted.

In this way, the card type wireless communication terminal 2 can implement intermittent wireless communication that can attain the consumed power required from the information terminal 1 in accordance with the required consumed power information sent from the information terminal 1. In this case, the card type wireless communication terminal 2 can determine the clock stop time period step by step in correspondence with a situation by looking up table data stored in the ROM 16 so as not to consume electric power more than the consumed power required from the information terminal 1. The information terminal 1 can calculate electric power to be consumed by wireless communication of the card type wireless communication terminal 2 by sending the required consumed power information to the card type wireless communication terminal 2. For this reason, the information terminal 1 can estimate the battery remaining amount more accurately.

(3) A case will be explained below wherein the card type wireless communication terminal 2 shifts to SNIFF mode when the size of data to be transmitted/received with an apparatus as a wireless communication partner is equal to or smaller than a predetermined size, or there is no data to be transmitted/received.

FIG. 9 is a flowchart showing the flow of control when there is no data to be transmitted/received in the card type wireless communication terminal 2.

The card type wireless communication terminal 2 monitors by means of the communication control unit 11 whether no data has been transmitted/received with the information terminal 1 via the SD interface 12 for a predetermined time period (t0). That is, the communication control unit 11 sets a timer value used to measure the predetermined time period (t0) to be an initial value "0" (step D1), starts measurement, and monitors the presence/absence of data to be transmitted/received via the SD interface 12, while updating the timer value.

If no data has been transmitted/received during the predetermined time period (t0) (step D2), the communication control unit 11 changes the wireless communication mode from a normal mode to SNIFF mode that intermittently transmits data, so as to reduce consumed power.

At this time, the card type wireless communication terminal 2 determines a time period T1 in which packet transmission/reception is inhibited upon making intermittent wireless communication in SNIFF mode by looking up table data stored in the ROM 16 (step D3).

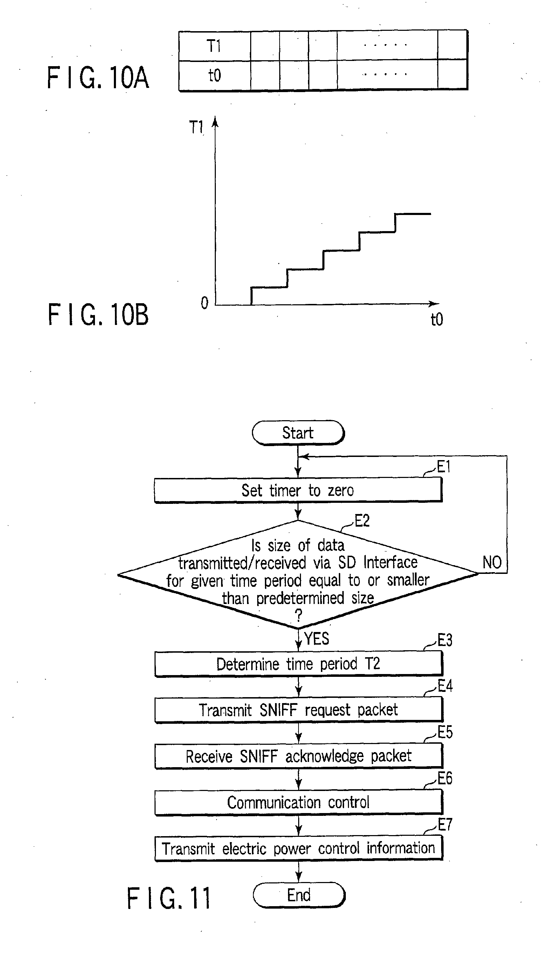

FIGS. 10A and 10B show an example of table data pre-stored in the ROM 16 of the card type wireless communication terminal 2. The ROM 16 stores a table set with data indicating the time period T1, which corresponds to each value of the predetermined time period (t0) used to monitor the presence/absence of data to be transmitted/received, as shown in FIG. 10A. The data indicating the time period T1 in the table is set based on the relationship between the predetermined time period (t0) and time period T1, as shown in FIG. 10B. That is, a longer time period T1 is set with increasing time period in which no data is transmitted/received.

Therefore, when no data has been transmitted/received for the predetermined time period (t0), the card type wireless communication terminal 2 determines the time period T1 in accordance with the predetermined time period (t0) used to monitor data. Hence, when the time period in which no data is transmitted/received is long, a long time period T1 is set to intermittently make wireless communication, thus prolonging the clock stoppable time period and reducing consumed power.
On the other hand, when the time period in which no data is transmitted/received is short, a short time period T1 is set to intermittently make wireless communication, thus shortening the clock stoppable time period. In this way, when no data has been transmitted/received for the predetermined time period (t0), the card type wireless communication terminal 2 can appropriately determine the time period T1 in accordance with that time period t0.

Note that the processes in steps D4 to D7 in the flowchart shown in FIG. 9 are the same as those in steps B2 to B5 in the flowchart shown in FIG. 6, and a detailed description thereof will be omitted. Also, since the information terminal 1 executes the same process as in the flowchart shown in FIG. 5, a detailed description thereof will be omitted.

In this manner, the card type wireless communication terminal 2 can shift to a communication mode capable of reducing electric power consumed by wireless communication in accordance with the presence/absence of data to be transmitted/received via the SD interface 12 within a predetermined time period without any instruction received from the information terminal 1. When data to be transmitted/received is detected, a normal communication mode is maintained; when no data to be transmitted/received is detected for a predetermined time period, the communication mode is changed to SNIFF mode, thus suppressing unnecessary consumed power.

Note that the predetermined time period (t0) used by the card type wireless communication terminal 2 to monitor transmission/reception of data may be changed in accordance with an instruction from the information terminal 1. In this case, the card type wireless communication terminal 2 determines the time period T1 according to the predetermined time period (t0) instructed by the information terminal 1 by looking up table data stored in the ROM 16.

When the predetermined time period (t0) used by the card type wireless communication terminal 2 to monitor transmission/reception of data is fixed, the ROM 16 may store only data indicating the time period T1 based on T1 = (t0)/2.

In the above description, the communication mode is changed to SNIFF mode when no data to be transmitted/received has been detected for a predetermined time period. Alternatively, intermittent wireless communication may be executed by determining a time period T1 in accordance with the size of data to be transmitted/received when the size of data to be transmitted/received becomes equal to or smaller than a predetermined size.

FIG. 11 is a flowchart showing the flow of control when the size of data to be transmitted/received in the card type wireless communication terminal 2 becomes equal to or smaller than a predetermined size.

The card type wireless communication terminal 2 monitors using the communication control unit 11 if the size of data to be transmitted/received with the information terminal 1 via the SD interface per unit time (Tunit) is equal to or smaller than a predetermined size. That is, the communication control unit 11 sets a timer value used to measure the unit time (Tunit) to be an initial value "0" (step E1), starts measurement, and monitors the size of data to be transmitted/received via the SD interface 12 while updating the timer value.

If the data transmission/reception size (D1) per unit time (Tunit) is equal to or smaller than a predetermined size, the data communication frequency band is in surplus, and unnecessary transmission/reception slots are present. The communication control unit 11 changes the wireless communication mode from the normal mode to SNIFF mode that transmits data intermittently so as to reduce consumed power in the unnecessary transmission/reception slots.

At this time, the communication control unit 11 determines a time period T1 in which packet transmission/reception is inhibited upon making intermittent wireless communication in SNIFF mode, on the basis of the data size D1 transmitted/received per unit time (Tunit) (step E3).

If T1 represents the current clock stop time period, T2 represents the next clock stop time period, D1 represents the data size transmitted/received per unit time (Tunit), and Dunit represents the data size transmitted/received per slot, for example, the time period T2 is determined by T2 = T1 + (D1/Dunit) × k (a constant where 0 ≦ k ≦ 1).

By contrast, if the data size per unit time (Tunit) is closer to (Tunit - T1) × Dunit, since it is determined that the frequency band traffic is heavy, the communication control unit 11 determines the time period T2 by T2 × j (a constant where 0 ≦ j ≦ 1) so as to shorten the time period T2.

Note that the processes in steps E4 to E7 in the flowchart shown in FIG. 11 are the same as those in steps B2 to B5 in the flowchart shown in FIG. 6, and a detailed description thereof will be omitted. Also, since the information terminal 1 executes the same process as in the flowchart shown in FIG. 5, a detailed description thereof will be omitted.

In this manner, when the size of data to be transmitted/received via the SD interface 12 is equal to or smaller than the predetermined size, the card type wireless communication terminal 2 can shift to the communication mode capable of reducing electric power consumed by wireless communication without receiving any instruction from the information terminal 1.
When the data size to be transmitted/received per unit time is larger than the predetermined size, the normal communication mode is maintained; when it is detected that the data size to be transmitted/received per unit time becomes equal to or smaller than the predetermined size, the communication mode is changed to SNIFF mode, thus suppressing unnecessary consumed power. When data is transmitted/received frequently although the data communication frequency band is not occupied, the consumed power can be reduced. Since the time period T2 is determined on the basis of the size of data to be transmitted/received per unit time (Tunit), the consumed power of the card type wireless communication terminal 2 can be reduced to an appropriate value.

In the first embodiment described above, since the card type wireless communication terminal 2 makes wireless communication according to the Bluetooth standards, wireless communication are made in SNIFF mode to reduce electric power consumed by the wireless communication. However, if a wireless communication technique used by the card type wireless communication terminal 2 is other than Bluetooth, the consumed power is reduced by making intermittent communication according to that wireless communication technique.

The card type wireless communication terminal 2 is implemented by mounting the wireless communication function in the SD card, but it may be implemented by another card type device which can be attached to the information terminal 1.

Furthermore, in the first embodiment described above, the information terminal 1 can make data communication via a wireless communication channel by receiving the card type wireless communication terminal 2. Alternatively, the information terminal 1 may have a built-in wireless communication unit having a function equivalent to that provided to the aforementioned card type wireless communication terminal 2.

The second embodiment of the present invention will be described below.

The second embodiment efficiently uses electric power to attain power saving by controlling the data size to be transmitted between apparatuses in accordance with various circumstances. The target circumstances of the second embodiment include environmental information (ambient noise, ambient temperature, and the like), and the remaining amount of a battery mounted on the apparatus.

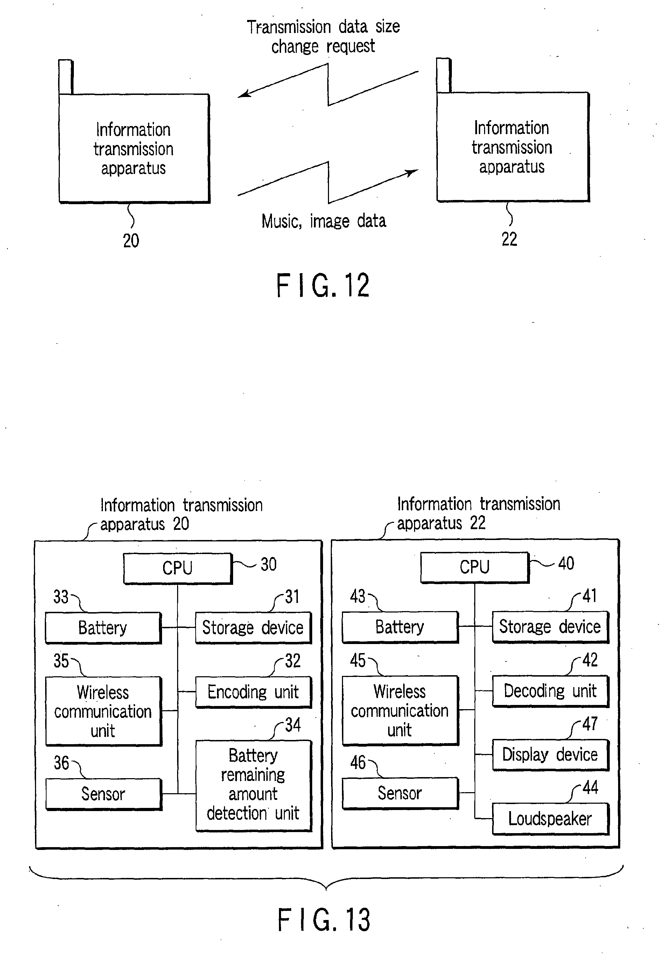

FIG. 12 shows a schematic arrangement of an information transmission system using information communication apparatuses (information transmission apparatuses 20 and 22) according to the second embodiment. An information transmission apparatus 20 shown in FIG. 12 exchanges information with an information transmission apparatus 22 via a wireless communication channel. Each of the information transmission apparatuses 20 and 22 is implemented by a computer which loads a program recorded on a recording medium, and the operation of which is controlled by the program. In the second embodiment, a case will be exemplified below wherein the information transmission apparatus 20 transmits music data and moving image data to the information transmission apparatus 22 via a wireless communication channel, and the information transmission apparatus 22 displays or plays back the received data.

FIG. 13 is a block diagram showing the system arrangement of the information transmission apparatuses 20 and 22.

As shown in FIG. 13, the information transmission apparatus 20 comprises a CPU 30, storage device 31, encoding unit 32, battery 33, battery remaining amount detection unit 34, wireless communication unit 35, and sensor 36.

The CPU 30 implements various functions by executing a program stored in the storage device 31, and controls the respective units described below of the apparatus in collaboration. The CPU 30 implements a function of controlling the transmission data size (rate) per unit time by switching the quality of data to be transmitted in accordance with ambient temperature data detected by the sensor 36, the battery remaining amount of the battery 33 detected by the battery remaining amount detection unit 34, or a transmission data size change request received from a wireless communication partner (information transmission apparatus 22), so as to reduce electric power consumed by wireless communication.

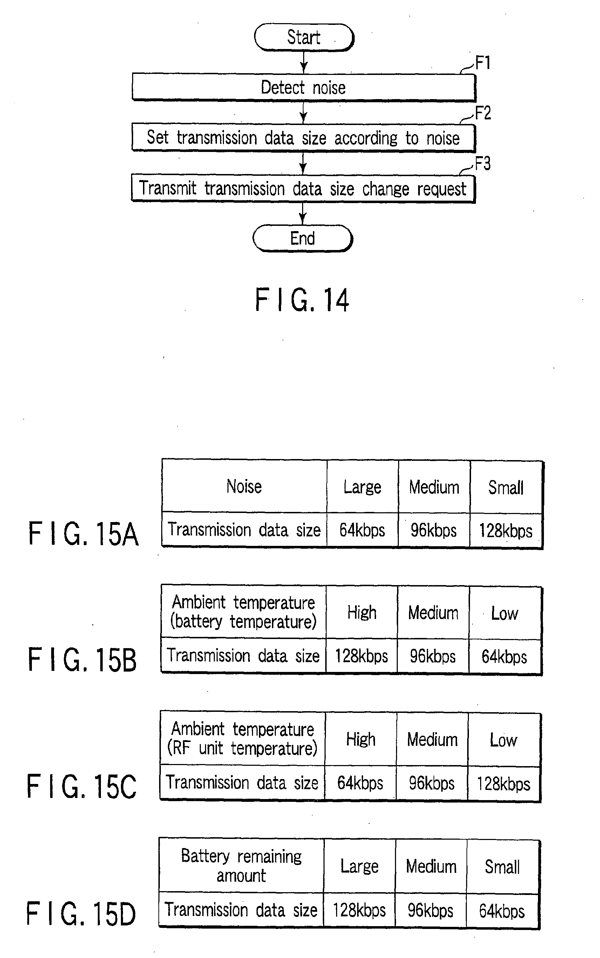

The storage device 31 stores programs, data, and the like used to control the information transmission apparatus 20. The programs stored in the storage device 31 include an information communication program for controlling the transmission data size to suppress electric power consumed by wireless communication. The data stored in the storage device 31 include various content data such as image (moving image, still image) data and music data, rule data (see FIG. 15) to be looked up upon controlling the transmission data size, and the like.

The encoding unit 32 executes encoding that reduces the transmission data size per unit time under the control of the CPU 30 upon transmitting image data and music data stored in the storage device 31 from the wireless communication unit 35 via a wireless communication channel.

The battery 33 supplies electric power to the respective units which form the apparatus.

The battery remaining amount detection unit 34 detects the'battery remaining amount of the battery 33, and sends it to the CPU 30.

The wireless communication unit (RF unit) 35 serves as a wireless communication interface (I/F), demodulates a signal received via an antenna (not shown), and modulates a signal to be transmitted and transmits the modulated signal via the antenna.

The sensor 36 has a function of detecting ambient temperature, and sends the detected ambient temperature data to the CPU 30.

The information transmission apparatus 22 comprises a CPU 40, storage device 41, decoding unit 42, battery 43, loudspeaker 44, wireless communication unit 45, sensor 46, and display device 47.

The CPU 40 implements various functions by executing a program stored in the storage device 41, and controls the respective units described below of the apparatus in collaboration. The CPU 40 implements a function of transmitting a transmission data size change request according to noise detected by the sensor 46 to the information transmission apparatus 20 as a data transmission source, so as to reduce electric power consumed by wireless communication. The CPU 40 receives music and image data transmitted from the information transmission apparatus 20 using the wireless communication unit 45, decodes the received data using the decoding unit 42, and plays them back via the display device 47 and loudspeaker 44.

The storage device 41 stores programs, data, and the like used to control the information transmission apparatus 22. The programs stored in the storage device 41 include an information communication program for controlling the transmission data size so as to reduce electric power consumed by wireless communication. Also, the data stored in the storage device 41 includes various content data such as image data and music data, which are received from the information transmission apparatus 20, rule data (see FIGS. 15A to 15D) to be looked up upon controlling the transmission data size, and the like.

The decoding unit 42 decodes encoded data under the control of the CPU 40. The decoding unit 42 decodes encoded data when image and music data received from the information transmission apparatus 20 via the wireless communication unit 45 are encoded.

The battery 43 supplies electric power to respective units which form the apparatus.

The wireless communication unit (RF unit) 45 serves as a wireless communication interface (I/F), demodulates a signal received via an antenna (not shown), and modulates a signal to be transmitted and transmits the modulated signal via the antenna.

The sensor 46 has a function of detecting ambient noise, and sends the detected noise data to the CPU 40.

The display device 47 displays various kinds of information under the control of the CPU 40. For example, the display device 47 displays an image based on image data received from the information transmission apparatus 20.

The loudspeaker 44 plays back various kinds of information under the control of the CPU 40. For example, the loudspeaker 44 outputs music on the basis of music data received from the information transmission apparatus 20.

The operation for changing the transmission data size in the information transmission system of the second embodiment will be described below. In the second embodiment, in order to reduce electric power consumed by wireless communication, the transmission data size is changed based on (1) to (3) below.
That is, the transmission data size is controlled by switching the quality of data to be transmitted in accordance with (1) the ambient noise level detected by the information transmission apparatus 22 on the data receiving side, (2) ambient temperature (battery temperature, RF unit temperature) detected by the information transmission apparatus 20 on the data transmitting side, and (3) the battery remaining amount of the battery 33 detected by the information transmission apparatus 20 on the data transmitting side. Cases (1) to (3) will be described below.

(1) A case will be explained below wherein the transmission data size is controlled by switching the quality of data to be transmitted on the basis of the noise level detected by the information transmission apparatus 22 on the data receiving side.

The information transmission apparatus 22 has a function of detecting ambient noise using the sensor 46, and transmits to the information transmission apparatus 20 a data size change request of data to be transmitted in accordance with the detected noise level. That is, if the ambient noise level is high, it is determined that high-quality music data need not be transmitted, and a transmission data size change request is issued to lower the quality of music data and to suppress the transmission data size.
Conversely, when the ambient noise level is low, a transmission data size change request is issued to improve the quality of music data and to increase the transmission data size.

Upon receiving the transmission data size change request, the information transmission apparatus 20 transmits data which is stored in the storage device 31 and meets that transmission data size change request, or controls the encoding unit 32 having a code size adjustment function to generate data that meets the transmission data size change request, and transmits that data.

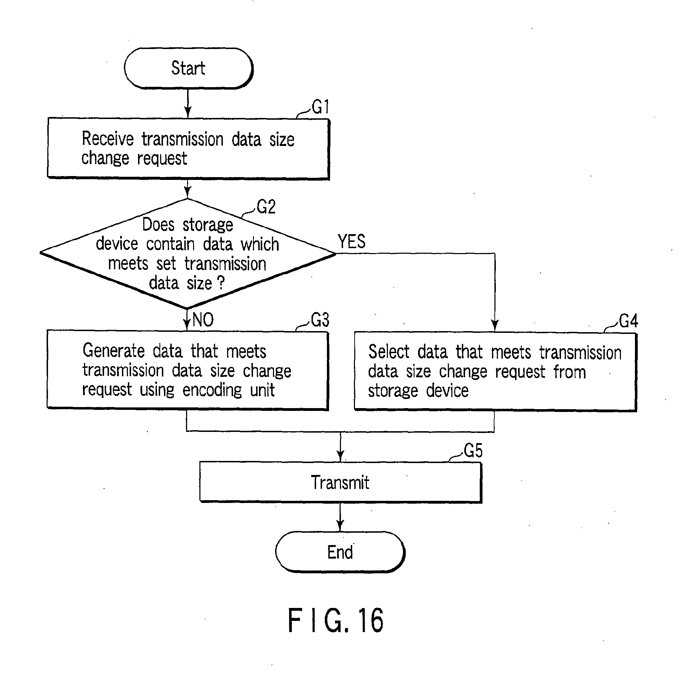

FIG. 14 is a flowchart showing the flow of control in the information transmission apparatus 22 on the data receiving side, and FIG. 16 is a flowchart showing the flow of control in the information transmission apparatus 20 on the data transmitting side.

The information transmission apparatus 22 receives image or music data from the information transmission apparatus 20 via the wireless communication unit 45, plays back an image or music on the basis of the received data, and outputs it via the display device 47 or loudspeaker 44. During this process, the information transmission apparatus 22 detects the ambient noise using the sensor 46 (step F1).

As a result of noise detection, the CPU 40 checks the detected noise level (high, medium, low) on the basis of a pre-set reference value, and sets a transmission data size according to the current circumstance by looking up rule data pre-stored in the storage device 41 in correspondence with the noise levels (step F2).

As the rule data used in such case, an example shown in FIG. 15A is available. In the rule data shown in FIG. 15A, the transmission data sizes (rates) are determined in accordance with the noise levels (high, medium, low). That is, a smaller transmission data size is set with increasing noise level. In this example; the transmission data rates of 64, 94, and 128 kbps are respectively set in correspondence with high, medium, and low noise levels.

After the transmission data size is set in correspondence with the current noise level, the CPU 40 sends it as a transmission data size change request to the information transmission apparatus 20 via the wireless communication unit 45 (step F3).

On the other hand, upon receiving the transmission data size change request from the information transmission apparatus 22 via the wireless communication unit 35 (step G1), the CPU 30 of the information transmission apparatus 20 sets a transmission data size in accordance with the request. The CPU 30 checks if data that meets the transmission data size change request is contained in the storage device 31 (step G2). That is, the CPU 30 checks if image or music data to be transmitted to the information transmission apparatus 22 has a data size that meets the transmission data size change request received from the information transmission apparatus 22.

As a result, if it is determined that the storage device 31 contains data which meets the transmission data size change request, the CPU 30 selects that data (step G4), and transmits it to the information transmission apparatus 22 (step G5).

On the other hand, if it is determined that the storage device 31 does not contain any data which meets the transmission data size change request, the CPU 30 generates data that meets the transmission data size change request by controlling the encoding unit 32 having a code size adjustment function to encode data to be transmitted to the information transmission apparatus 22, which is contained in the storage device 31 (step G3), and transmits the data, the transmission data size of which has been adjusted, to the information transmission apparatus 22 (step G5).

An example of a method of adjusting the transmission data size of music data will be explained below.

When music data is data based on the MP3 (MPEG-1 Audio Layer-III) format, and its transmission data size is to be changed, files which are encoded in correspondence with several different bit rates may be contained in the storage device 31, and a file with a bit rate corresponding to the transmission data size change request may be transmitted, or encoding may be redone at a bit rate corresponding to the transmission data size change request, and the encoded data may be transmitted.

Since the information transmission apparatus 22 detects the ambient noise level while it is receiving data from the information transmission apparatus 20, and transmits a transmission data size change request to the information transmission apparatus 20 in correspondence with that noise level, the transmission data size of data transmitted from the information transmission apparatus 20 is dynamically changed in correspondence with a change in ambient noise of the information transmission apparatus 22. Therefore, the transmission data size of data to be transmitted from the information transmission apparatus 20 to the information transmission apparatus 22 increases when the ambient noise level of the information transmission apparatus 22 falls, and the information transmission apparatus 22 can play back high-quality music.

When the ambient noise level of the information transmission apparatus 22 on the data receiving side is high, since the information transmission apparatus 22 need not always play back high-quality music, the quality of music data is lowered to suppress the transmission data size, thus suppressing consumed power required for data transmission.

(2) A case will be explained below wherein the transmission data size is controlled by switching the quality of data to be transmitted on the basis of ambient temperature data (battery temperature, RF unit temperature) detected by the information transmission apparatus 20 on the data transmitting side.

The information transmission apparatus 20 has a function of detecting ambient temperature using the sensor 36, and changes the data size to be transmitted in accordance with the detected ambient temperature. That is, when the ambient temperature becomes low, since the performance of the battery 33 drops and the operative time becomes shorter, the quality of data to be transmitted is lowered to reduce the transmission data size, thus suppressing consumed power required for transmission. On the other hand, when the ambient temperature becomes high, the transmission data size is increased to improve the quality of data. When the ambient temperature becomes high, since the performance of the wireless communication unit (RF unit) 35 drops, and the quality of transmission data drops, it is determined that high-quality data need not be transmitted, and the quality of data to be transmitted is lowered to reduce the transmission data size, thus suppressing consumed power required for transmission. Conversely, when the ambient temperature becomes low, the transmission data size is increased to improve the quality of data.

A case will be explained first wherein the temperature of the battery 33 changes in correspondence with a change in ambient temperature.

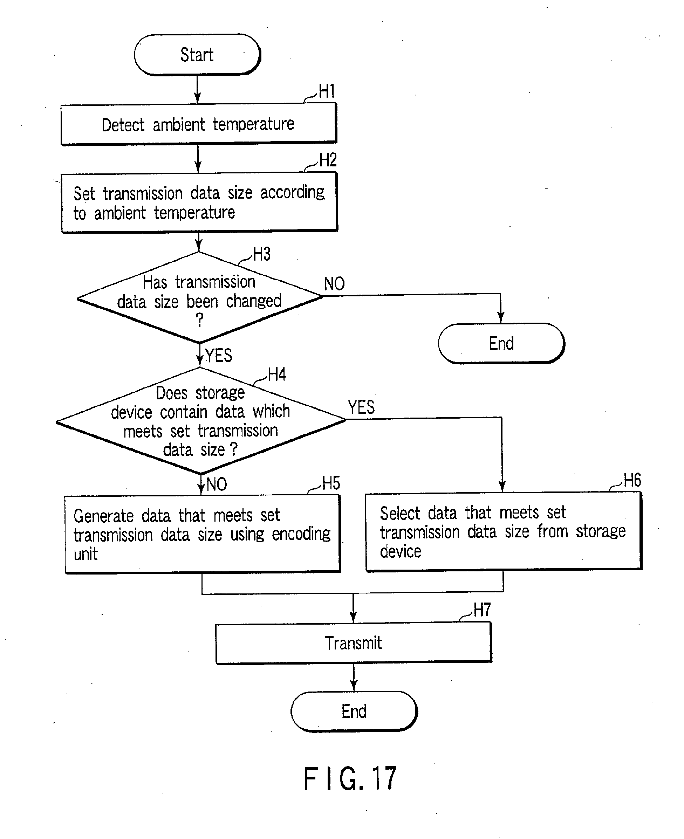

FIG. 17 is a flowchart showing the flow of control in correspondence with a change in ambient temperature in the information transmission apparatus 20.

Upon transmitting music or image data to the information transmission apparatus 22, the information transmission apparatus 20 detects ambient temperature using the sensor 36 (step H1).

As a result of ambient temperature detection, the CPU 30 checks the detected ambient temperature level (high, medium, low) on the basis of a pre-set reference value, and sets a transmission data size corresponding to the current circumstance by looking up rule data pre-stored in the storage device 31 in correspondence with the ambient temperature levels (step H2).

As rule data used in such case, an example shown in FIG. 15B is available. In the rule data-shown in FIG. 15, the transmission data rates per unit time are set in correspondence with ambient temperature levels (high, medium, low) (associated with battery temperature). That is, a smaller transmission data size is set with lowering ambient temperature. In this example, the transmission data rates of 128, 94, and 64 kbps are respectively set in correspondence with high, middle, and low ambient temperatures.

In this case, the CPU 30 checks if the transmission data size set in step H2 has changed from the one set so far (step H3). If the transmission data size remains the same, the CPU 30 continues data transmission with the current transmission data size.

On the other hand, if it is determined that the transmission data size set in step H2 has changed from the one set so far, the CPU 30 checks if the storage device 31 stores data which meets the transmission data size set in step H2 (step H4).

As a result, if the storage device 31 stores data that meets the set transmission data size, the CPU 30 selects that data (step H6), and transmits it to the information transmission apparatus 22 (step H7).

If the storage device 31 does not store any data which meets the transmission data size set in step H2, the CPU 30 generates data that meets the set transmission data size by controlling the encoding unit 32 to encode data to be transmitted to the information transmission apparatus 22, which is stored in the storage device 31 (step H5), and transmits the data, the transmission data size of which has been adjusted, to the information transmission apparatus 22 (step H7).

An example of a method of adjusting the transmission data size of image data will be described below.

For example, if moving image data is data based on MPEG4, and its transmission data size is to be changed, encoding may be redone to enlarge or reduce the image size, or the transmission data size may be changed by changing the frame rate by setting different I- or P-picture intervals.

Note that the transmission data size of music data can be adjusted in the same manner as described above.

When the ambient temperature around the information transmission apparatus 20 is low, the performance of the battery 33 drops, and the operative time becomes shorter. In such case, the consumed power required for data transmission is suppressed by lowering the quality of data to be transmitted to reduce the transmission data size, thereby efficiently using electric power.

A case will be explained wherein the temperature of the wireless communication unit (RF unit) 35 changes in correspondence with a change in ambient temperature. In such case, the transmission data size is controlled in accordance with the flowchart shown in FIG. 17 as in the above case, and rule data shown in FIG. 15C is looked up upon setting the transmission data size in correspondence with the detected ambient temperature level.

In the rule data used in such case, as shown in, e.g., FIG. 15C, the transmission data rates per unit time are set in correspondence with the ambient temperature levels (high, medium, low) (associated with the RF unit temperature), and a smaller transmission data size is set with increasing ambient temperature. In this example, the transmission data rates of 64, 94, and 128 kbps are respectively set in correspondence with the high, medium, and low ambient temperatures.

That is, when the ambient temperature becomes high, since the performance of the wireless communication unit (RF unit) 35 drops, and the quality of transmission data drops, it is determined that high-quality data need not be transmitted, and consumed power required for transmission is suppressed by lowering the data quality to reduce the transmission data size; when the ambient temperature becomes low, the transmission data size is controlled to be increased by setting high data quality.

In this manner, when the ambient temperature around the information transmission apparatus 20 is high, since the performance of the wireless communication unit (RF unit) 35 drops, and the quality of transmission data lowers, consumed power required for transmission is suppressed by reducing the transmission data size, thus efficiently using electric power.

In the above description, when the control covers the battery temperature, the transmission data size is increased with increasing ambient temperature; when the control covers the RF unit temperature, the transmission data size is decreased with increasing ambient temperature. Hence, conflicting control operations are made in correspondence with a change in ambient temperature.

Therefore, the transmission data size may be changed based on one of the battery temperature and RF unit temperature.

On the other hand, when the transmission data size is always changed based on both the temperatures, information, whose change imposes larger influence, may be weighted to calculate a change value as a combination of both the temperatures, and the transfer data size may be set in accordance with that change value. Information to be weighted is determined on the basis of the required performance of the information transmission apparatus, the characteristics of mounted components, and the like. A weighting coefficient may be fixed, or may be variable.

(3) A case will be explained below wherein the transmission data size is controlled by switching the quality of data to be transmitted on the basis of the battery remaining amount of the battery 33 detected by the information transmission apparatus 20 on the data transmitting side.

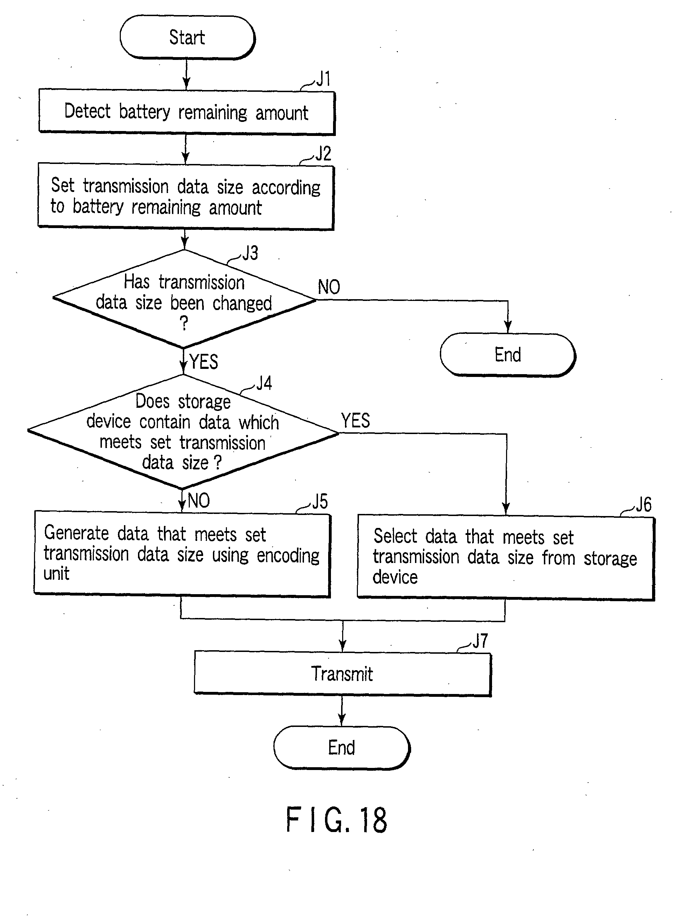

FIG. 18 is a flowchart showing the flow of control in accordance with the battery remaining amount of the battery 33 in the information transmission apparatus 20.

The information transmission apparatus 20 detects the remaining amount of the battery 33 using the battery remaining amount detection unit 34 (step J1).

As a result of remaining amount detection of the battery 33, the CPU 30 checks the detected battery remaining amount level (large, medium, small) on the basis of a predetermined reference value, and sets a transmission data size according to the current circumstance by looking up rule data pre-stored in the storage device 31 in correspondence with the remaining amount levels (step J2).

As rule data used in this case, an example shown in FIG. 15D is available. In the rule data shown in FIG. 15D, the transmission data rates per unit time are set in correspondence with the remaining amount levels (large, medium, small). That is, a larger transmission data size is set with increasing battery remaining amount. In this example, transmission data rates of 128, 94, and 64 kbps are respectively set in correspondence with the large, medium, and small battery amounts.

The CPU 30 checks if the transmission data size set in step J2 has changed from the one set so far (step J3). If the transmission data size remains the same, the CPU 30 continues data transmission with the current transmission data size.

On the other hand, if it is determined that the transmission data size set in step J2 has changed from the one set so far, the CPU 30 checks if the storage device 31 contains data which meets the transmission data size set in step J2 (step J4).

As a result, if the storage device 31 contains data that meets the set transmission data size, the CPU 30 selects that data (step J6), and transmits it to the information transmission apparatus 22 (step J7).

If the storage device 31 does not contain any data which meets the transmission data size set in step J2, the CPU 30 generates data that meets the set transmission data size by controlling the encoding unit 32 to encode data to be transmitted to the information transmission apparatus 22, which is contained in the storage device 31 (step J5), and transmits the data, the transmission data size of which has been adjusted, to the information transmission apparatus 22 (step J7).

In this manner, when the remaining amount of the battery 33 of the information transmission apparatus 20 is small, the operative time is short. In such case, consumed power required for data transmission is suppressed by lowering the quality of data to be transmitted to reduce the transmission data size, and the operative time can be prolonged by efficiently using electric power.

In the second embodiment, the transmission data size is changed in three steps, as shown in FIGS. 15A to 15D. Alternatively, the transmission data size may be changed in a larger number of steps to appropriately cope with a change in situation.

In the second embodiment, the control processes of the transmission data size based on the environmental information (noise, ambient temperature) and battery remaining amount have been independently explained. Alternatively, the transmission data size may be changed on the basis of both the environmental information (noise, ambient temperature) and battery remaining amount. In such case, the transmission data size may be changed selectively based on one information depending on each situation, or may be changed always based on the two kinds of information. When the transmission data size is changed based on both the two kinds of information, information, whose change imposes larger influence, may be weighted to calculate a change value as a combination of the two kinds of information, and the transfer data size may be set in accordance with that change value. Information to be weighted is determined on the basis of the required performance of the information transmission apparatus, the characteristics of mounted components, and the like. A weighting coefficient may be fixed, or may be variable.

In the second embodiment, the information transmission apparatus 20 on the data transmitting side and the information transmission apparatus 22 on the data receiving side have been independently explained. Alternatively, an information transmission apparatus having the functions of both the information transmission apparatuses 20 and 22 may be designed. In such case, the function of the information transmission apparatus 20 is executed upon executing data transmission, and that of the information transmission apparatus 22 is executed upon receiving data.

In the above description, the first and second embodiments have been independently explained. Also, the data transmission size per unit time may be changed by practicing techniques (those explained in (1) to (3)) of these embodiments in combination so as to reduce consumed power required for wireless communication.

For example, when data is transmitted by changing the transmission data size according to the technique of the second embodiment, and the communication method according to the technique of the first embodiment, consumed power required for wireless communication can be reduced. Such modification can be implemented by mounting a function equivalent to that of the card type wireless communication terminal 2 of the first embodiment in the wireless communication unit 35 of the information transmission apparatus 20 in the second embodiment. Or such modification can be implemented by mounting functions equivalent to those of the information transmission apparatuses 20 and 22, i.e., by providing the encoding unit 32, decoding unit 42, sensors 36 and 46, and the like in the information terminal 1 of the first embodiment.

Furthermore, when the clock stoppable time period upon making intermittent communication in the first embodiment is determined on the basis of various situations, i.e., environmental information (ambient noise, ambient temperature) used in control of the transmission data size in the second embodiment, the first and second embodiments can be combined.

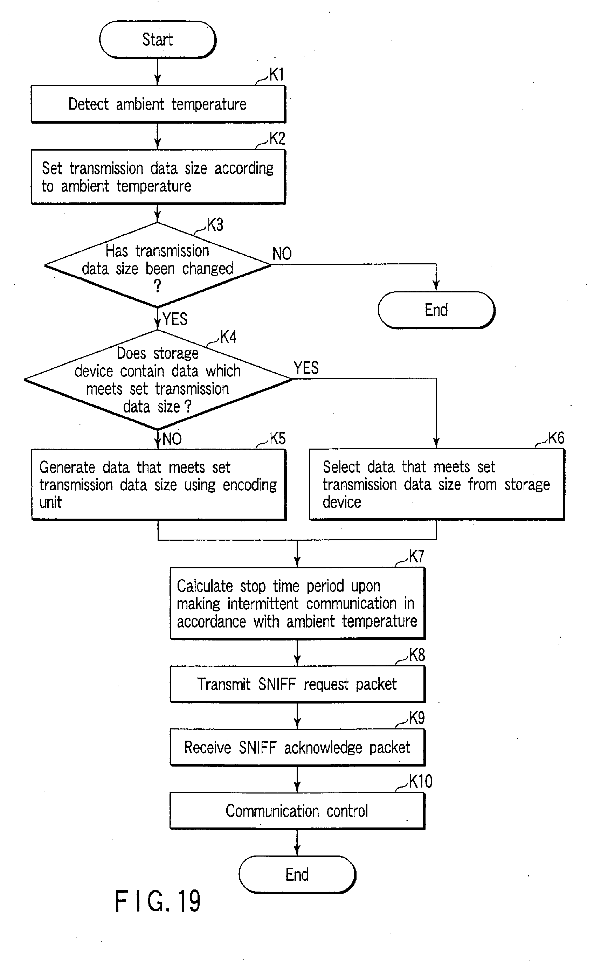

FIG. 19 is a flowchart showing the flow of control upon changing the data transmission size per unit time in correspondence with a change in ambient temperature in the information transmission apparatus 20. Assume that the function of the card type wireless communication terminal 2 in the first embodiment is mounted on the information transmission apparatus 20.

As shown in the flowchart in FIG. 19, the transmission data size is set in correspondence with ambient temperature detected by the sensor 36 to prepare for data to be transmitted in accordance with that transmission data size in steps K1 to K6 as in steps H1 to H6 shown in FIG. 17.

On the other hand, the information transmission apparatus 20 calculates the stop time period upon making intermittent communication in SNIFF mode in accordance with the detected ambient temperature. For example, when the stop time period is calculated in consideration of the RF unit temperature, a longer stop time period is set with increasing ambient temperature.

The information transmission apparatus 20 outputs a SNIFF request packet that requests communication in SNIFF mode with the calculated stop time period to a wireless communication partner via the RF unit 14 and antenna 15 (step K8). Upon receiving a SNIFF acknowledge packet from the wireless communication partner in response to the SNIFF request packet sent to that partner (step K9), data is transmitted by executing communication control is executed in accordance with the calculated stop time period upon making intermittent communication in SNIFF mode (step K10).

Note that the stop time period upon making intermittent communication can be determined based on not only the ambient temperature (RF unit temperature), but also the battery temperature, battery remaining amount, and noise detected at the communication partner (in this case, the transmission data size change request is received from the communication partner).

In this way, the transmission data size is set and the stop time period upon making intermittent data communication in SNIFF mode can be determined on the environmental information and battery remaining amount, which are used in the control of the second embodiment. As a result, power saving can be implemented more efficiently than the first or second embodiment.

The method of the present invention described in each of the above embodiments may be stored in a recording medium such as a magnetic disk (flexible disk, hard disk, or the like), an optical disk (CD-ROM, DVD, or the like), a semiconductor memory, or the like, as an information communication program that can be executed by a computer, and such recording medium can be provided to various apparatuses. Also, such program can be delivered to various apparatuses via communication media. The computer which implements the apparatus of the present invention loads the program recorded on the recording medium or receives the program via the communication medium, and its operation is controlled by the program, thus implementing the aforementioned processes.

## Claims

1. An information communication apparatus, **characterized by** comprising:
a battery (8);
a battery remaining amount detection unit (7) configured to detect a battery remaining amount of the battery;
a stop period determination unit (11) configured to determine a wireless communication stop period on the basis of the battery remaining amount detected by the battery remaining amount detection unit; and
a wireless communication unit (11) configured to execute intermittent wireless communication in accordance with the wireless communication stop period determined by the stop period determination unit.

2. An apparatus according to claim 1, **characterized in that** the stop period determination unit (11) determines the wireless communication stop period on the basis of the battery remaining amount when the battery remaining amount detected by the battery remaining amount detection unit (7) becomes not more than a predetermined value.

3. An apparatus according to claim 1, **characterized in that** the stop period determination unit (11) determines a consumed power amount determined according to the battery remaining amount when the battery remaining amount detected by the battery remaining amount detection unit (7) becomes not more than a predetermined value, and determines the wireless communication stop period on the basis of the consumed power amount.

4. An information communication apparatus, **characterized by** comprising:
a stop period determination unit (11) configured to determine a wireless communication stop period the basis of a size of data to be transmitted/received by the wireless communication; and
a wireless communication unit (11) configured to execute intermittent wireless communication in accordance with the wireless communication stop period determined by the stop period determination unit.

5. An apparatus according to claim 4,
**characterized in that** the stop period determination unit (11) determines the wireless communication stop period on the basis of a given time period when it is detected that no data has been transmitted/received during the given time period by the wireless communication.

6. An apparatus according to claim 4,
**characterized in that** the stop period determination unit (11) determines the wireless communication stop period on the basis of a data size when the size of data to be transmitted/received by the wireless communication becomes not more than a predetermined value.

7. A wireless communication terminal which is mounted on an information terminal (1), arid makes wireless communication with another apparatus,
**characterized by** comprising:
a stop period determination unit (11) configured to determine a wireless communication stop period upon executing intermittent wireless communication on the basis of a size of information associated with electric power, which is acquired from the information terminal (1);
a wireless communication unit (11) configured to execute intermittent wireless communication with the other apparatus in accordance with the wireless communication stop period determined by the stop period determination unit; and
a control unit (13) configured to stop operation of the intermittent wireless communication executed by the wireless communication unit during the wireless communication stop period.

8. A terminal according to claim 7, **characterized in that** the stop period determination unit (11) acquires electric power remaining amount information indicating a battery remaining amount from the information terminal (1), and determines the wireless communication stop period on the basis of the battery remaining amount when the battery remaining amount indicated by the electric power remaining amount information becomes not more than a predetermined value.

9. A terminal according to claim 7, **characterized in that** the stop period determination unit (11) acquires consumed power information determined in accordance with a battery remaining amount from the information terminal (1), and determines the wireless communication stop period on the basis of the consumed power information.

10. A wireless communication terminal which is mounted on an information terminal (1), and makes wireless communication with another apparatus, **characterized by** comprising:
a stop period determination unit (11) configured to determine a wireless communication stop period upon executing intermittent wireless communication on the basis of a size of data to be transmitted/received by the wireless communication;
a wireless communication unit (11) configured to execute intermittent wireless communication with the other apparatus in accordance with the wireless communication stop period determined by the stop period determination unit; and
a control unit (13) configured to stop an operation of the intermittent wireless communication executed by the wireless communication unit during the wireless communication stop period.

11. A terminal according to claim 10,
**characterized in that** the stop period determination unit (11) determines the wireless communication stop period on the basis of a given time period when it is detected that no data has been transmitted/received during the given time period by the wireless communication.

12. A terminal according to claim 10, **characterized in that** the stop period determination unit (11) determines the wireless communication stop period on the basis of a data size when the size of data to be transmitted/received by the wireless communication becomes not more than a predetermined value.

13. An information communication apparatus for transmitting data to another apparatus via wireless communication, **characterized by** comprising:
a transmission data size setting unit (30, 40) configured to set a transmission data size on the basis of environmental information; and
an encoding unit (32) configured to encode data to be transmitted so as to be encoded data size corresponding to the transmission data size set by the transmission data size setting unit.

14. An apparatus according to claim 13, **characterized in that** the transmission data size setting unit (40) sets the transmission data size in accordance with environmental information detected by a sensor (46), and transmits a transmission data size change request indicating the set transmission data size to the other apparatus (20).

15. An apparatus according to claim 13, **characterized in that** the transmission data size setting unit (30) receives a transmission data size change request, which indicates a transmission data' size set based on environmental information detected by the other apparatus (22), and changes the transmission data size in accordance with the received transmission data size change request.

16. An apparatus according to claim 13,
**characterized by** further comprising:
a stop period determination unit (35) configured to determine a wireless communication stop period upon executing intermittent wireless communication on the basis of the environmental information; and
a wireless communication unit (35) configured to execute intermittent wireless communication with the other apparatus in accordance with the wireless communication stop period determined by the stop period determination unit, and stopping operation during the wireless communication stop period.

17. An information communication apparatus for transmitting data to another apparatus via wireless communication, **characterized by** comprising:
a battery (33);
a battery remaining amount detection unit (34) configured to detect a battery remaining amount of the battery (33);
a transmission data size setting unit (30, 40) configured to set a transmission data size on the basis of the battery remaining amount detected by the battery remaining amount detection unit (34); and
an encoding unit (32) configured to encode data to be transmitted so as to be encoded data size corresponding to the transmission data size set by the transmission data size setting unit.

18. An apparatus according to claim 17,
**characterized by** further comprising:
a stop period determination unit (35) configured to determine a wireless communication stop period upon executing intermittent wireless communication on the basis of the battery remaining amount detected by the battery remaining amount detection unit (34); and
a wireless communication unit (35) configured to execute intermittent wireless communication with the other apparatus in accordance with the wireless communication stop period determined by the stop period determination unit, and stopping operation during the wireless communication stop period.
